# EUROPEAN PATENT SPECIFICATION

(11) **EP 0 707 756 B1**
(45) Date of publication and mention of the grant of the patent: **07.05.1997**
(21) Application number: 93917078.3
(22) Date of filing: 09.07.1993
(51) Int. Cl.: H02P 3/06

(54) **ELECTRIC MOTOR BRAKING**
BREMSEN EINES ELEKTRISCHEN MOTORS
FREINAGE D'UN MOTEUR ELECTRIQUE

(43) Date of publication of application: 24.04.1996
(73) Proprietor: RYOBI MOTOR PRODUCTS CORP., Pickens, SC 29671 (US)
(72) Inventor: PEOT, David, George, Easley, SC 29642 (US)
(74) Representative: W.P. Thompson & Co.
(86) International application number: US9306492
(87) International publication number: WO9502276

(56) References cited:
- DE-A- 2 838 967
- DE-A- 2 840 397
- DE-A- 3 022 852
- DE-A- 3 636 555
- US-A- 4 144 482

## Description

### Technical Field

The present invention relates to braking a series/Universal motor having a field winding for normal operation and a separate field winding for braking in addition to the armature winding.

### Background Art

Regulations pertaining to certain motor-operated implements such as hedge trimmers, which require two handed operation are changing to require a structure that will assist in braking of the motor. More specifically, these regulations require that both gripping surfaces contain a switch which must be actuated to operate the implement. These switches are interconnected such that releasing the grip on either handle disconnects the motor from the power supply circuit (see DE-A-28 38 967).

Additionally, the regulations typically specify a maximum stopping time -- the time it takes the blades or cutting devices to stop after one of the grips is released. This maximum stopping time is usually less than the normal coasting time of the motor and drive mechanism. These regulations seek to prevent undesirable contact of the hand with the blade. Additionally, the will help prevent the cutting of power supply cords, and other objects not meant to be cut, when the hedge trimmer is set down with the blade still coasting.

Today, there are commercially available products that comply with this requirement. In these products, there are three general methods of compliance. In the first method, two switch braking is accomplished by interrupting the power supply circuit with a switch in each handle and activating a mechanical braking mechanism, such as a hand brake. Another method is to use an electrical dynamic brake on one switch and a mechanical braking mechanism activated by the other switch. The third method utilizes two switches with electrical braking in conjunction with a permanent magnet motor.

### Summary Of The Invention

It is an object of the present invention to provide improved braking in a motor-operated implement having two switches for operating the motor such that when either of the two switches are released, the cutting blade will stop quickly.

The above object is provided by the features of Claims 1, 2, 4 and 7.

In a preferred construction, the hedge trimmer would have one switch located in each handle, thereby insuring that both hands are properly positioned on the normal gripping surfaces before the unit can be operated. Releasing the hand from either handle would disconnect the power supply from the motor and activate the braking action. The switches could be single-pole, double-pole or a combination of both. More specifically, during normal operation, actuation of both switches is required to provide power to the main field coil which is connected in series with the armature winding. Deactuating either switch disconnects the motor from the power supply and connect the braking coil across the armature winding, thereby braking the motor.

The above object and other objects, features, and advantages of the present invention will be readily appreciated from the following detailed description of the best mode for carrying out the invention when taken in connection with the accompanying drawings.

### Brief Description Of The Drawings

FIGURE 1 is a schematic of a first embodiment of the present invention including a series motor with a brake winding and two single-pole, double-throw switches connected to a power source;
FIGURE 2 is a schematic of a second embodiment of the present invention including a series motor with a brake winding and two double-pole, double-throw switches connected to a power source;
FIGURE 3 is a schematic of a third embodiment of the third invention including a series motor with a brake winding, a single-pole, double-throw switch and a double-pole, double-throw switch connected to a power source; and
FIGURE 4 is a schematic of a fourth embodiment of the present invention including a series motor with a brake winding, a pair of single-pole, double-throw switches and a current limiting resistor.

### Best Mode For Carrying Out The Invention

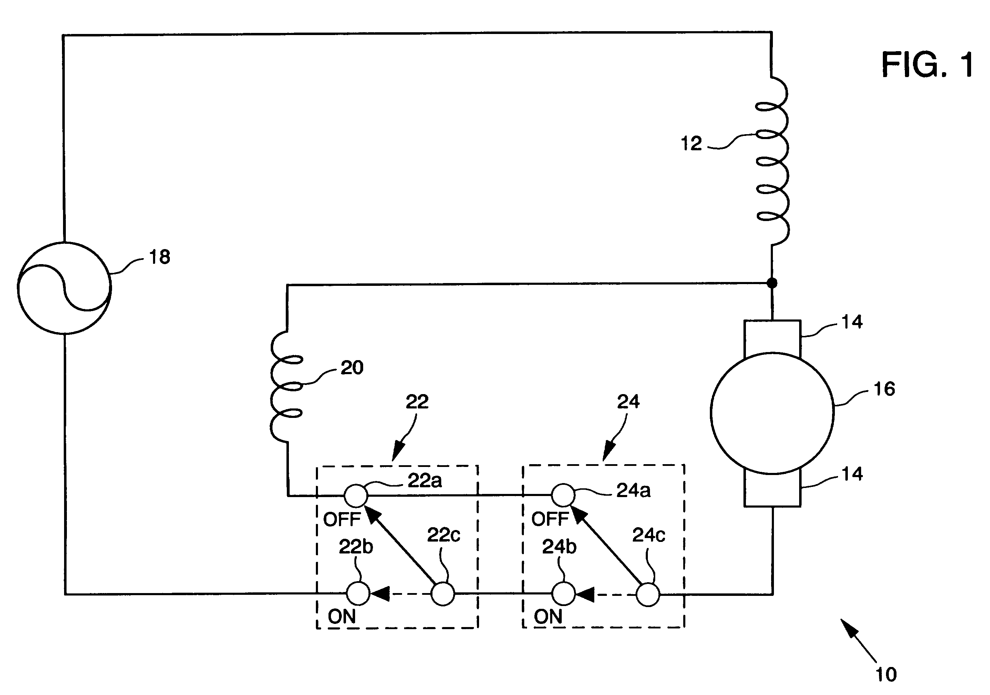

Referring now to Figure 1, there is shown a circuit schematic of the first preferred embodiment of the present invention. As shown, this embodiment includes a dynamoelectric machine consisting of a series motor 10 having a field winding 12, electrical brushes 14 and an armature 16, connected to an AC or DC power supply 18. As shown, the motor 10 also includes a separate brake winding 20 preferably in parallel with the brushes 14 and armature 16. In the preferred embodiment, the separate brake winding 20 is wound in the same direction as the field winding 12, but so that the current flow therethrough is opposite that of the field winding. This type of electrical connection is obtained through the use of single-pole, double-throw (SPDT) switches 22 and 24. The.arrangement of motor 10, power supply 18, brake winding 20 and switches 22 and 24 shown is particularly useful in certain motor-operated implements, such as hedge trimmers and the like, which require two-handed operation. In these types of motor-operated implements, the motor 10 drives for example cutting blades, and it may be desirable to quickly stop the motor when the trimmer is released by either hand so as to stop the cutting action of the blades.

In the preferred embodiment, the switches 22 and 24 are disposed within the handle(s) of the hedge trimmer in the area that is gripped by the operator, such that when the operator has both hands on the handle grips, both of the switches would be in the ON position. The switches 22 and 24 are electrically interconnected such that when either of the switches are in the OFF position, as shown in Figure 1, the brake winding 20 is in parallel with the brushes 14 and armature 16.

To achieve this function, the OFF contact 22a of switch 22 is tied to one end of the brake winding 20 and the OFF contact 24a of switch 24, whereas the ON contact 22b of switch 22 is tied to the power supply 18. As shown in Figure 1, the COMMON contact 22c of switch 22 is tied to the ON contact 24b of switch 24. The COMMON contact of switch 24 is tied to one of the brushes 14.

In operation, when both switches 22 and 24 are in the OFF position (i.e. both of the operator's hands are off of the handle grip), the power supply 18 is disconnected from the motor circuit including the field coil 12, the brushes 14 and the armature 16 and the brake winding 20 is connected in parallel with the brushes and the armature. If one of the switches 22 or 24 is then actuated to the ON position (shown in phantom in Figure 1), the motor circuit remains disconnected from the power supply 18 and, therefore, the brake winding 20 remains connected across the brushes and the armature. However, when both switches 22 and 24 are actuated to the ON position, the power supply 18 is connected to the motor circuit, energizing the motor 10.

The brake winding 20 is disconnected from the circuit as long as the motor 10 remains energized (i.e. both switches are in the ON position). If during operation, either handle grip is released, the power supply 18 will immediately be disconnected and the brake winding 20 connected across the brushes 14 and the armature 16. This results in a braking action, quickly stopping the motor 10.

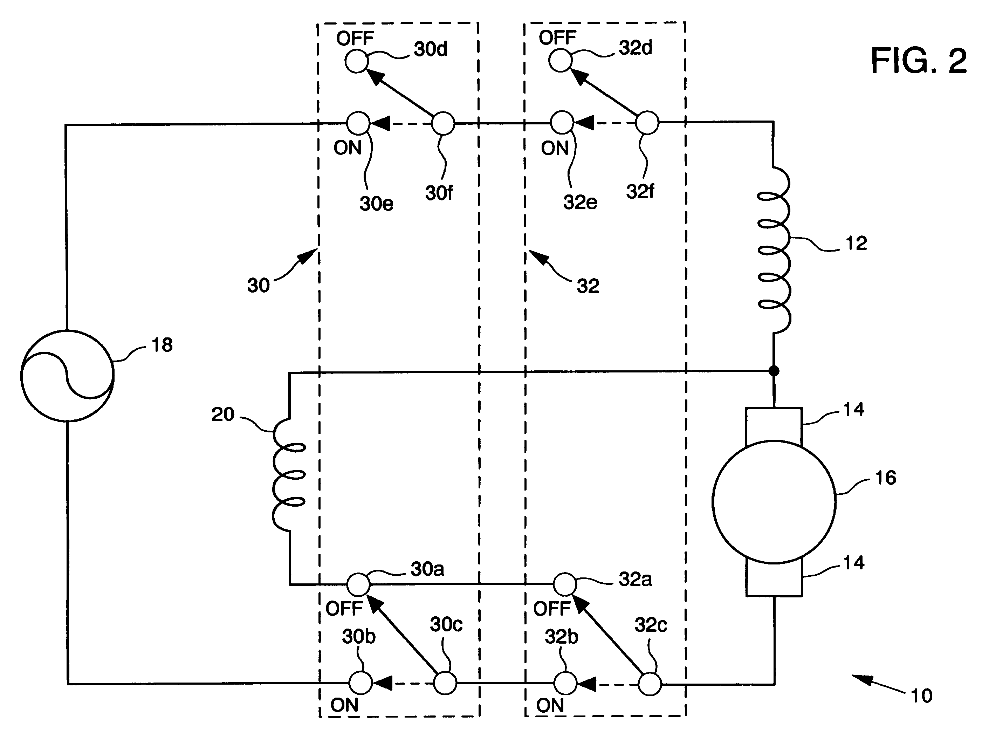

Referring now to Figure 2, there is shown a circuit diagram for a second embodiment of the present invention. The motor and circuit configurations are similar to that described for Figure 1, with the difference being the switches 30 and 32 are double-pole, double-throw (DPDT) switches. As shown, the first pole is connected and operates identical to the embodiment of Figure 1. As is known, the poles of the switches 30, 32 act coincidentally or concurrently.

With continuing reference to Figure 2, the second poles of the switches 30 and 32, however, are electrically connected between the power supply 18 and the field coil 12 with the ON contact 30e tied to the power supply, the COMMON contact 30f tied to the ON contact 32e of switch 32 and the COMMON contact of switch 32 tied to one side of the field coil 12. The OFF contacts 30d, 32d are left unconnected. The functioning of the circuit remains virtually unchanged from that of Figure 1, with the exception that when either or both of the switches 30 or 32 are actuated to the OFF position as shown in Figure 2, both sides of the power supply are disconnected from the motor 10.

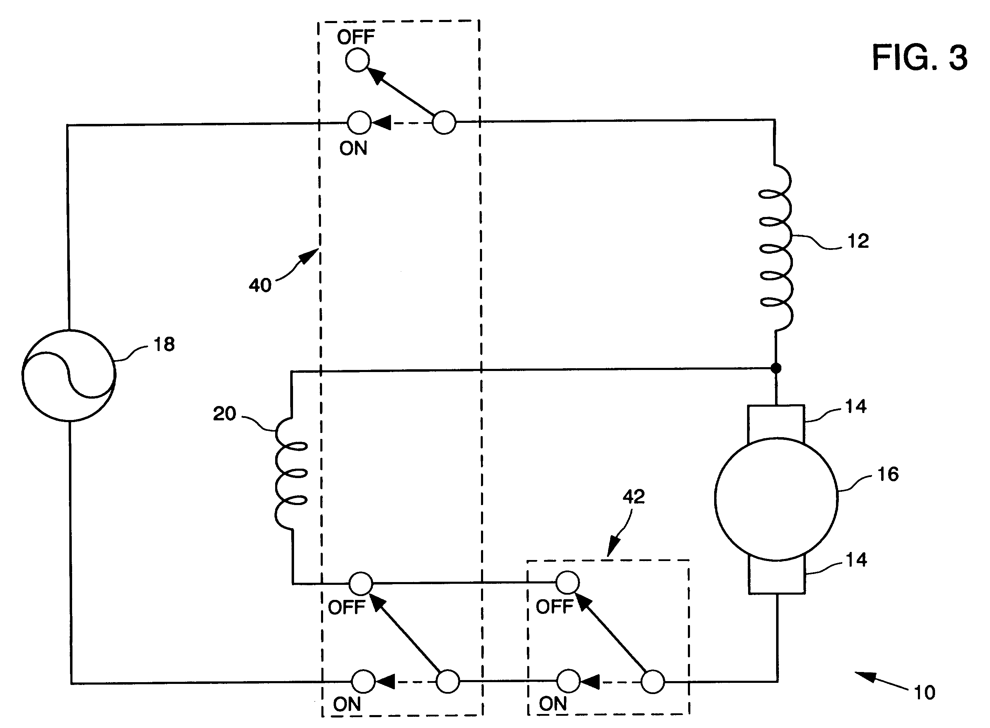

Referring now to Figure 3, there is shown a circuit diagram for a third embodiment of the present invention. The motor and circuit configurations are similar to that described in Figure 1, except that one switch 40 is a double-pole, double-throw switch and the second switch 42 is a single-pole, double-throw (SPDT) switch. Of course, switch 40 could be SPDT and switch 42 could be the DPDT switch, without effecting operation of the circuit. The poles of switch 40 are electrically interconnected as described above with reference to switch 30 of Figure 2, and the switch 42 is electrically interconnected as described above with reference to Figure 1.

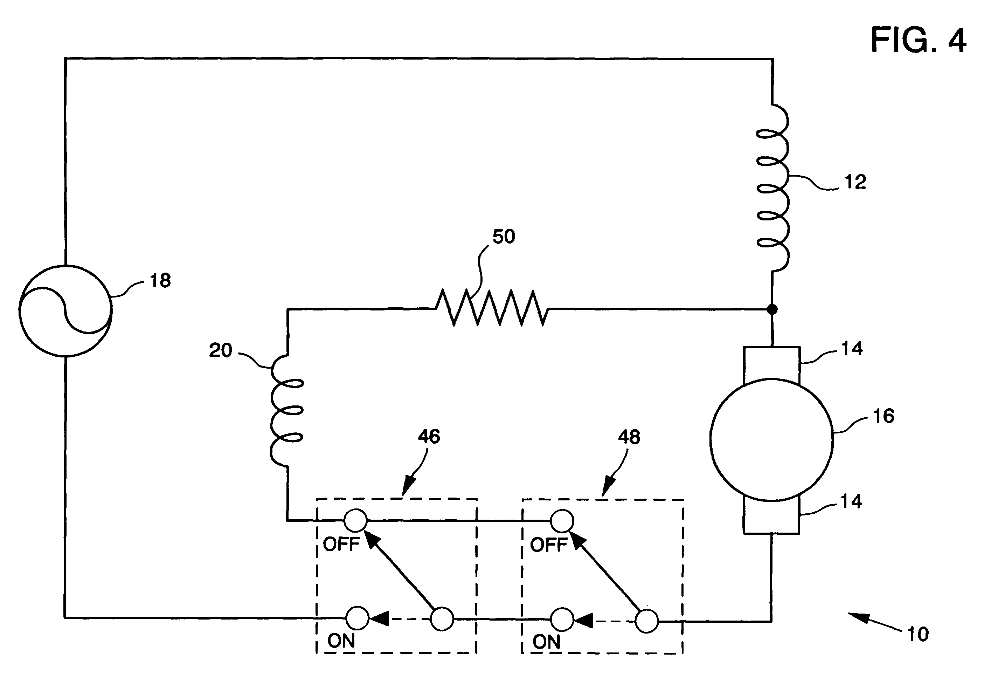

Referring now to Figure 4, there is shown a circuit diagram for a fourth embodiment of the present invention. This motor and circuit configuration is substantially similar to that described in Figure 1, including two SPDT switches 46 and 48, except a resistor 50 is electrically connected in series relation with the brake winding 20 and one of the brushes 14.

With continuing reference to Figure 4, the resistor 50 functions to limit the current flow in the braking circuit which is operative when either of the switches 46 or 48 is actuated to the OFF position (i.e. when either hand of the operator releases the handle grip). By limiting the current flowing in the braking circuit, the speed of the braking action can be limited. Limiting the severity with which the motor is brakes has the advantage of reducing the destructive forces caused by sudden stopping of the motor 10. Additionally, the use of the braking resistor 50 will reduce the heat generated in the braking coil 20, reducing wearing of the motor commutator and brushes during the braking action. The actual speed of the braking action can thus be varied by selecting the appropriate resistor 50. Of course, the embodiments shown in Figures 1-3 may be modified to include the current limiting resistor.

It is to be understood, of course, that while the forms of the invention described above constitute the preferred embodiments of the invention, the preceding description is not intended to illustrate all possible forms thereof. It is also to be understood that the words used are words of description, rather than limitation, and that various changes may be made without departing from the scope of the invention, which should be construed according to the following claims.

## Claims

1. A motor braking circuit arrangement, for use with a series/universal motor (10) and a power supply (18) for supplying power to the motor, the motor having a stator and an armature for rotating relative to the stator, the circuit arrangement comprising:
a field winding (12) wound about the stator, the field winding electrically connected in series with an armature winding wound about the armature;
a separate brake winding (20) wound about the stator;
two series-connected single-pole switches (22,24), each switch capable of assuming a first position associated with normal motor operation and a second position associated with motor braking, the switches being electrically interconnected with the power supply, the armature and the brake winding such that the motor is energized by the power supply when both switches are in said first position, and such that when either of the switches is in the second position, the motor is disconnected from the power supply and the brake winding is electrically connected in parallel with the armature so as to effect motor braking.

2. A motor braking circuit arrangement, for use with a series/universal motor (10) and a power supply (18) for supplying power to the motor, the motor having a stator and an armature for rotating relative to the stator, the circuit arrangement comprising:
a field winding (12) wound about the stator, the field winding electrically connected in series with an armature winding wound about the armature;
a separate brake (20) winding wound about the stator;
two series-connected switches (30,32) each having a first pole and second pole which act coincidentally, each pole of each switch capable of assuming a first position associated with normal motor operation and a second position associated with motor braking, the switches being electrically interconnected with the power supply, the field winding, the armature and the brake winding such that the motor is energized by the power supply when the poles of the switches are in said first position, and such that when both poles of either of the switches are in the second position, the motor is electrically isolated from the power supply and the brake winding is electrically connected in parallel with the armature so as to effect motor braking.

3. The motor braking circuit arrangement of claim 2 further comprising a resistor (50) electrically connected in series with the separate brake winding, the resistor limiting the current flow through the separate brake winding when the brake winding is electrically connected in parallel with the armature, the resistor functioning to limit the rate of motor braking.

4. A motor braking circuit arrangement, for use with a series/universal motor (10) and a power supply (18) for supplying power to the motor, the motor having a stator and an armature for rotating relative to the stator, the circuit arrangement comprising:
a field winding (12) wound about the stator, the field winding electrically connected in series with an armature winding wound about the armature;
a separate brake winding (20) wound about the stator;
two series-connected switches including a first single-pole switch (40) and a second switch (42) having a first pole and a second pole which act coincidentally, each pole of each switch capable of assuming a first position associated with normal motor operation and a second position associated with motor braking, the switches being electrically interconnected with the power supply, the field winding, the armature and the brake winding such that the motor is energized by the power supply when the poles of the switches are in said first position, and such that when the poles of either of the switches are in the second position, the motor is disconnected from the power supply and the brake winding is electrically connected in parallel with the armature so as to effect motor braking.

5. The motor braking circuit arrangement of claim 4 further comprising a resistor (50) electrically connected in series with the separate brake winding, the resistor limiting the current flow through the separate brake winding when the brake winding is electrically connected in parallel with the armature, the resistor functioning to limit the rate of motor braking.

6. The motor braking circuit arrangement of claim 4 wherein the switches (40,42) are electrically interconnected with the power supply, the field winding, the armature and the brake winding such that when the poles of the second switch (42) are in the second position, the motor is electrically isolated from the power supply and the brake winding is electrically connected in parallel with the armature so as to effect motor braking.

7. A motor braking circuit arrangement for use with a series/universal motor (10) and a power supply (18) for supplying power to the motor, the motor having a stator and an armature for rotating relative to the stator, the circuit arrangement comprising:
a field winding (12) wound about the stator, the field winding electrically connected in series with an armature winding wound about the armature;
a series-connected separate brake winding (20) and resistor (50), the separate brake winding wound about the stator;
two series-connected single-pole switches (46,48), each switch capable of assuming a first position associated with normal motor operation and a second position associated with motor braking, the switches being electrically interconnected with the power supply, the armature and the brake winding such that the motor is energized by the power supply when both switches are in said first position, and such that when either of the switches is in the second position, the motor is disconnected from the power supply and the brake winding and resistor are electrically connected in parallel with the armature so as to effect motor braking.

## Patentansprüche

1. Motorbremsschaltungsanordnung zur Verwendung mit einem Serien-/Universalmotor (10) und einer Stromversorgung (18) zur Zuführung von Strom zu dem Motor, wobei der Motor einen Ständer und einen Läufer zur Rotation relativ zu dem Ständer aufweist, wobei die Schaltungsanordnung folgendes umfaßt:
eine Feldwicklung (12), die um den Ständer gewickelt ist, wobei die Feldwicklung elektrisch in Reihe mit einer um den Läufer gewickelten Läuferwicklung geschaltet ist;
eine separate Bremswicklung (20), die um den Ständer gewickelt ist;
zwei in Reihe geschaltete einpolige Schalter (22, 24), wobei jeder Schalter eine erste Position, die mit dem normalen Motorbetrieb verbunden ist, und eine zweite Position, die mit der Motorbremsung verbunden ist, einnehmen kann, wobei die Schalter elektrisch mit der Stromversorgung, dem Läufer und der Bremswicklung auf eine solche Weise verbunden sind, daß der Motor durch die Stromversorgung aktiviert wird, wenn sich beide Schalter in der genannten ersten Position befinden, und auf eine solche Weise, daß der Motor, wenn sich einer der Schalter in der zweiten Position befindet, von der Stromversorgung getrennt und die Bremswicklung elektrisch parallel mit dem Läufer geschaltet wird, um die Motorbremsung zu bewirken.

2. Motorbremsschaltungsanordnung zur Verwendung mit einem Serien-/Universalmotor (10) und einer Stromversorgung (18) zur Zuführung von Strom zu dem Motor, wobei der Motor einen Ständer und einen Läufer zur Rotation relativ zu dem Ständer aufweist, wobei die Schaltungsanordnung folgendes umfaßt:
eine Feldwicklung (12), die um den Ständer gewickelt ist, wobei die Feldwicklung elektrisch in Reihe mit einer um den Läufer gewickelten Läuferwicklung geschaltet ist;
eine separate Bremswicklung (20), die um den Ständer gewickelt ist;
zwei in Reihe geschaltete Schalter (30, 32), die jeweils einen ersten und einen zweiten Pol aufweisen, die gleichzeitig arbeiten, wobei jeder Pol jedes Schalters eine erste Position, die mit dem normalen Motorbetrieb verbunden ist, und eine zweite Position, die mit der Motorbremsung verbunden ist, einnehmen kann, wobei die Schalter elektrisch mit der Stromversorgung, der Feldwicklung, dem Läufer und der Bremswicklung auf eine solche Weise verbunden sind, daß der Motor durch die Stromversorgung aktiviert wird, wenn sich die Pole der Schalter in der genannten ersten Position befinden, und auf eine solche Weise, daß der Motor, wenn sich beide Pole eines der Schalter in der zweiten Position befinden, elektrisch von der Stromversorgung getrennt und die Bremswicklung elektrisch parallel mit dem Läufer geschaltet wird, um die Motorbremsung zu bewirken.

3. Motorbremsschaltungsanordnung nach Anspruch 2, ferner umfassend einen Widerstand (50), der elektrisch in Reihe mit der separaten Bremswicklung geschaltet ist, wobei der Widerstand den Stromfluß durch die separate Bremswicklung begrenzt, wenn die Bremswicklung elektrisch parallel mit dem Läufer geschaltet ist, wobei der Widerstand die Motorbremsrate begrenzt.

4. Motorbremsschaltungsanordnung zur Verwendung mit einem Serien-/Universalmotor (10) und einer Stromversorgung (18) zur Zuführung von Strom zu dem Motor, wobei der Motor einen Ständer und einen Läufer zur Rotation relativ zu dem Ständer aufweist, wobei die Schaltungsanordnung folgendes umfaßt:
eine Feldwicklung (12), die um den Ständer gewickelt ist, wobei die Feldwicklung in Reihe mit einer um den Läufer gewickelten Läuferwicklung geschaltet ist;
eine separate Bremswicklung (20), die um den Ständer gewickelt ist;
zwei in Reihe geschaltete Schalter mit einem ersten einpoligen Schalter (40) und einem zweiten Schalter (42) mit einem ersten Pol und einem zweiten Pol, die gleichzeitig arbeiten, wobei jeder Pol jedes Schalters eine erste Position, die mit dem normalen Motorbetrieb verbunden ist, und eine zweite Position, die mit der Motorbremsung verbunden ist, einnehmen kann, wobei die Schalter elektrisch mit der Stromversorgung, der Feldwicklung, dem Läufer und der Bremswicklung auf eine solche Weise verbunden sind, daß der Motor durch die Stromversorgung aktiviert wird, wenn sich die Pole der Schalter in der genannten ersten Position befinden, und auf eine solche Weise, daß der Motor, wenn sich beide Pole eines der Schalter in der zweiten Position befinden, von der Stromversorgung getrennt und die Bremswicklung elektrisch parallel mit dem Läufer geschaltet wird, um die Motorbremsung zu bewirken.

5. Motorbremsschaltungsanordnung nach Anspruch 4, ferner umfassend einen Widerstand (50), der elektrisch in Reihe mit der separaten Bremswicklung geschaltet ist, wobei der Widerstand den Stromfluß durch die separate Bremswicklung begrenzt, wenn die Bremswicklung elektrisch parallel mit dem Läufer geschaltet ist, wobei der Widerstand die Motorbremsrate begrenzt.

6. Motorbremsschaltungsanordnung nach Anspruch 4, bei der die Schalter (40, 42) elektrisch mit der Stromversorgung, der Feldwicklung, dem Läufer und der Bremswicklung auf eine solche Weise verbunden sind, daß der Motor, wenn sich die Pole des zweiten Schalters (42) in der zweiten Position befinden, elektrisch von der Stromversorgung getrennt und die Bremswicklung elektrisch parallel mit dem Läufer geschaltet wird, um die Motorbremsung zu bewirken.

7. Motorbremsschaltungsanordnung zur Verwendung mit einem Serien-/Universalmotor (10) und einer Stromversorgung (18) zur Zuführung von Strom zu dem Motor, wobei der Motor einen Ständer und einen Läufer zur Rotation relativ zu dem Ständer aufweist, wobei die Schaltungsanordnung folgendes umfaßt:
eine Feldwicklung (12), die um den Ständer gewickelt ist, wobei die Feldwicklung elektrisch in Reihe mit einer um den Läufer gewickelten Läuferwicklung geschaltet ist;
eine in Reihe geschaltete separate Bremswicklung (20) und einen Widerstand (50), wobei die separate Bremswicklung um den Ständer gewickelt ist;
zwei in Reihe geschaltete einpolige Schalter (46, 48), wobei jeder Schalter eine erste Position, die mit dem normalen Motorbetrieb verbunden ist, und eine zweite Position, die mit der Motorbremsung verbunden ist, einnehmen kann, wobei die Schalter elektrisch mit der Stromversorgung, dem Läufer und der Bremswicklung auf eine solche Weise verbunden sind, daß der Motor durch die Stromversorgung aktiviert wird, wenn sich beide Schalter in der genannten ersten Position befinden, und auf eine solche Weise, daß der Motor, wenn sich einer der Schalter in der zweiten Position befindet, von der Stromversorgung getrennt wird und die Bremswicklung und der Widerstand elektrisch parallel mit dem Läufer geschaltet werden, um die Motorbremsung zu bewirken.

## Revendications

1. Agencement de circuit de freinage de moteur destiné à être utilisé avec un moteur universel/série (10) et alimentation électrique (18) destinée à alimenter le moteur, le moteur ayant un stator et un induit destiné à être en rotation par rapport au stator, l'agencement de circuit comprenant :
un enroulement inducteur (12) enroulé autour du stator, l'enroulement inducteur étant connecté électriquement en série à un enroulement d'induit enroulé autour de l'induit ;
un enroulement de freinage séparé (20) enroulé autour du stator ;
deux commutateurs unipolaires connectés en série (22, 24), chaque commutateur pouvant prendre une première position associée au fonctionnement normal du moteur et une seconde position associée au freinage du moteur, les commutateurs étant interconnectés électriquement avec l'alimentation électrique, l'induit et l'enroulement de freinage, de sorte que le moteur est alimenté par l'alimentation électrique lorsque les deux commutateurs sont dans ladite première position et de sorte que, lorsque l'un ou l'autre des commutateurs est dans la seconde position, le moteur est déconnecté de l'alimentation électrique et l'enroulement de freinage est électriquement connecté en parallèle à l'induit, de manière à réaliser le freinage du moteur.

2. Agencement de circuit de freinage de moteur destiné à être utilisé avec un moteur universel/série (10) et alimentation électrique (18) destinée à alimenter le moteur, le moteur ayant un stator et un induit destiné à être en rotation par rapport au stator, l'agencement de circuit comprenant :
un enroulement inducteur (12) enroulé autour du stator, l'enroulement inducteur étant connecté électriquement en série à un enroulement d'induit enroulé autour de l'induit ;
un enroulement de freinage séparé (20) enroulé autour du stator ;
deux commutateurs connectés en série (30, 32) ayant chacun un premier et un second pôle agissant ensemble, chaque pôle de chaque commutateur pouvant prendre une première position associée au fonctionnement normal du moteur et une seconde position associée au freinage du moteur, les commutateurs étant interconnectés électriquement avec l'alimentation électrique, l'enroulement inducteur, l'induit et l'enroulement de freinage, de sorte que le moteur est alimenté par l'alimentation électrique lorsque les pôles des commutateurs sont dans ladite première position, et de sorte que, lorsque les deux pôles de l'un ou l'autre des commutateurs sont dans la seconde position, le moteur est électriquement coupé de l'alimentation électrique et l'enroulement de freinage est électriquement connecté en parallèle à l'induit, de manière à réaliser le freinage du moteur.

3. Agencement de circuit de freinage de moteur selon la revendication 2, comprenant en outre une résistance (50) électriquement connectée en série à l'enroulement de freinage séparé, la résistance limitant le flux de courant dans l'enroulement de freinage séparé lorsque l'enroulement de freinage est électriquement connecté en parallèle à l'induit, la résistance servant à limiter le degré de freinage du moteur.

4. Agencement de circuit de freinage de moteur destiné à être utilisé avec un moteur universel/série (10) et alimentation électrique (18) destinée à alimenter le moteur, le moteur ayant un stator et un induit destiné à être en rotation par rapport au stator, l'agencement de circuit comprenant :
un enroulement inducteur (12) enroulé autour du stator, l'enroulement inducteur étant électriquement connecté en série à un enroulement d'induit enroulé autour de l'induit ;
un enroulement de freinage séparé (20) enroulé autour du stator ;
deux commutateurs connectés en série comprenant un premier commutateur unipolaire (40) et un second commutateur (42) ayant un premier pôle et un second pôle qui agissent ensemble, chaque pôle de chaque commutateur pouvant prendre une première position associée au fonctionnement normal du moteur et une seconde position associée au freinage du moteur, les commutateurs étant interconnectés électriquement avec l'alimentation électrique, l'enroulement inducteur, l'induit et l'enroulement de freinage, de sorte que le moteur est alimenté par l'alimentation électrique lorsque les pôles des commutateurs sont dans ladite première position et de sorte que, lorsque les pôles de l'un ou l'autre des commutateurs sont dans la seconde position, le moteur est déconnecté de l'alimentation électrique et l'enroulement de freinage est électriquement connecté en parallèle à l'induit, de manière à réaliser le freinage du moteur.

5. Agencement de circuit de freinage de moteur selon la revendication 4, comprenant en outre une résistance (50) électriquement connectée en série à l'enroulement de freinage séparé, la résistance limitant le flux de courant dans l'enroulement de freinage séparé lorsque l'enroulement de freinage est électriquement connecté en parallèle à l'induit, la résistance servant à limiter le degré de freinage du moteur.

6. Agencement de circuit de freinage de moteur selon la revendication 4, dans lequel les commutateurs (40, 42) sont électriquement interconnectés avec l'alimentation électrique, l'enroulement inducteur, l'induit et l'enroulement de freinage, de sorte que, lorsque les pôles du second commutateur (42) sont dans la seconde position, le moteur est électriquement coupé de l'alimentation électrique et l'enroulement de freinage est électriquement connecté en parallèle à l'induit, de manière à réaliser le freinage du moteur.

7. Agencement de circuit de freinage de moteur destiné à être utilisé avec un moteur universel/série (10) et alimentation électrique (18) destinée à alimenter le moteur, le moteur ayant un stator et un induit destiné à être en rotation par rapport au stator, l'agencement de circuit comprenant :
un enroulement inducteur (12) enroulé autour du stator, l'enroulement inducteur étant électriquement connecté en série à un enroulement d'induit enroulé autour de l'induit ;
un enroulement de freinage séparé (20) et une résistance (50) connectés en série, l'enroulement de freinage séparé étant enroulé autour du stator ;
deux commutateurs unipolaires connectés en série (46, 48), chaque commutateur pouvant prendre une première position associée au fonctionnement normal du moteur et une seconde position associée au freinage du moteur, les commutateurs étant interconnectés électriquement avec l'alimentation électrique, l'induit et l'enroulement de freinage, de sorte que le moteur est alimenté par l'alimentation électrique lorsque les deux commutateurs sont dans ladite première position et de sorte que, lorsque l'un ou l'autre des commutateurs est dans la seconde position, le moteur est déconnecté de l'alimentation électrique et l'enroulement de freinage et la résistance sont électriquement connectés en parallèle à l'induit, de manière à réaliser le freinage du moteur.
